| (19) | Europäisches Patentamt<br>European Patent Office<br>Office européen des brevets | (11) | **EP 0 523 397 B1** |
|---|---|---|---|

(12) **EUROPÄISCHE PATENTSCHRIFT**

(45) Veröffentlichungstag und Bekanntmachung des Hinweises auf die Patenterteilung:
**13.03.1996 Patentblatt 1996/11**

(51) Int. Cl.$^6$: **B62D 7/15**

(21) Anmeldenummer: **92110444.4**

(22) Anmeldetag: **20.06.1992**

(54) **Verfahren zur Gewinnung der Giergeschwindigkeit und/oder Quergeschwindigkeit**

Method for production of the yaw rate or the transversal speed

Procédé pour l'obtention de la vitesse de lacet ou de la vitesse transversale

(84) Benannte Vertragsstaaten:
**DE FR GB SE**

(30) Priorität: **03.07.1991 DE 4121954**

(43) Veröffentlichungstag der Anmeldung:
**20.01.1993 Patentblatt 1993/03**

(73) Patentinhaber: **ROBERT BOSCH GMBH**
**D-70442 Stuttgart (DE)**

(72) Erfinder:
- **Cao, Chi-Thuan, Dr.-Ing.**
  **W-7015 Korntal-Münchingen 1 (DE)**
- **Bertram, Torsten, Dipl.-Ing.**
  **W-4000 Düsseldorf 13 (DE)**

(56) Entgegenhaltungen:
**DE-A- 3 734 477**

Printed by Rank Xerox (UK) Business Services
2.9.12/3.4

**Beschreibung**

<u>Stand der Technik</u>

Als ein Lösungskonzept für die geregelte Hinterachslenkung kann die robuste Modellfolgeregelung, basierend auf den Zustandsgrößen Quer- und Giergeschwindigkeit, gesehen werden (sh. DE-OS 40 30 846, veröffentlicht am 02.04.92). Der Messung der Giergeschwindigkeit mit Hilfe eines stabilisierenden Kreisels, eines Rate-Sensors oder eines Faserkreisels und der Messung der Quergeschwindigkeit mit dem Einsatz von korrelationsoptischen Verfahren stehen zwar keine technischen Grenzen im Wege. Der Einsatz von entsprechenden Sensoren und die Informationsverarbeitung der Meßsignale sprengen jedoch den ökonomischen Rahmen z.B. einer geregelten Hinterachslenkung.

Eine Möglichkeit, die schwer meßbaren Zustandsgrößen zu bestimmen, bietet der Einsatz eines Zustandsschätzers, wie "Kalman-Filter". Das Fahrzeug ist durch starke Nichtlinearitäten und veränderliche Parameter (Schwerpunktlage, Seitensteifigkeiten der Reifen, Fahrzeuggeschwindigkeit etc.) gekennzeichnet. Ein entsprechendes nichtlinearer Kalman-Filter übersteigt schnell die Rechenmöglichkeiten eines Fahrzeugrechners.

<u>Aufgabe Lösung</u>

Es ist daher die Aufgabe dieser Erfindung, die relevanten Fahrzeugbewegungsgrößen mit einer minimalen Anzahl von Sensoren, die entweder preiswert oder ohnehin im Fahrzeug vorhanden sind, und durch Einsatz eines technischen realisierbaren Verfahrens on-line laufend zu bestimmen.

Erfindungsgemäß wird diese Aufgabe durch die Merkmale des Anspruchs 1 gelöst.

Das erfindungsgemäße Verfahren ist auch anwendbar, wenn man zusätzlich oder nur eine der mehrere der folgenden Größen benötigt.

$\beta$ : Schwimmwinkel
$\alpha_v$ : Schräglaufwinkel vorne
$\alpha_h$ : Schräglaufwinkel hinten
$F_{yv}$ : Seitenführungskraft vorne
$F_{yh}$ : Seitenführungskraft hinten.

Das erfindungsgemäße Verfahren ist auch anwendbar, wenn keine Hinterachslenkung vorgesehen ist, also $\delta = 0$ gesetzt werden kann.

Anhand der Zeichnung wird ein Ausführungsbeispiel der Erfindung erläutert

Es zeigen:

Fig. 1    ein Blockschaltbild zur Durchführung des erfindungsgemäßen Verfahrens,
Fig. 2    ein detailiertes Blockschaltbild.

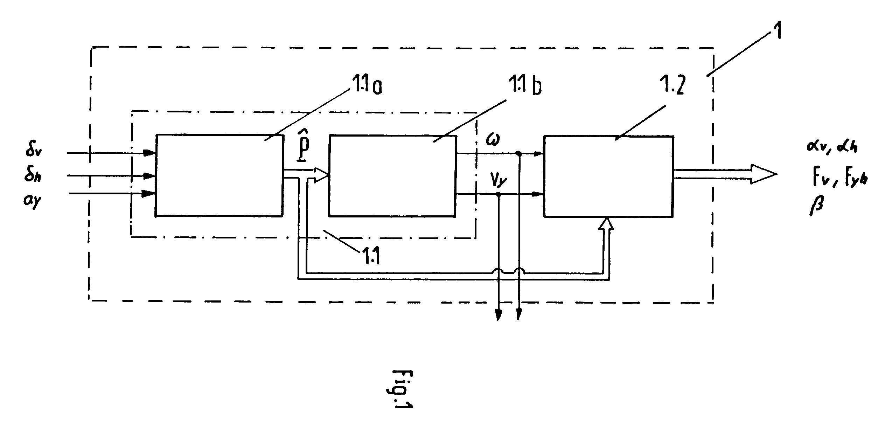

In Fig. 1 werden die Signale der Sensoren zur Messung des
    Lenkwinkels $\delta_v$ vorne, des
    Lenkwinkels $\delta_h$ hinten und der
    Querbeschleunigung $a_y$ im Schwerpunkt
in einen Zustandsschätzer 1 geführt, um die Bewegungsgrößen
    Giergeschwindigkeit $\omega$
    Fahrzeugquergeschwindigkeit $V_y$
zu betimmen.

Der Block 1 besteht aus 2 Anteilen:

1.1 enthält eine adaptive Filterung
1.2 eine arithmetische Umrechnung.

Im Block 1.1 werden zuerst über einen Parameterschätzalgorithmus (Block 1.1a: stochastische Approximation, Least-Squares usw.) einige Parameter p geschätzt. Aus diesem Parametervektor können die zwei Größen $\omega$ und $V_y$ rekonstruiert werden (Block 1.1b).

Die anderen Bewegungsgrößen $\beta$, $\alpha_v$, $\alpha_h$, $F_{yv}$, $F_{yh}$ können aus diesen Zustandsgrößen mit einfachen arithmetischen Umrechnungen (Block 1.2) abgeleitet werden.

Die so gewonnenen Bewegungsgrößen können z.B. direkt für folgende Fahrdynamik-Regelungen verwendet werden:

- aktive Allradlenkung
- ABS/ASR
- aktive Fahrwerkregelung mit verstellbarem Dämpfer.

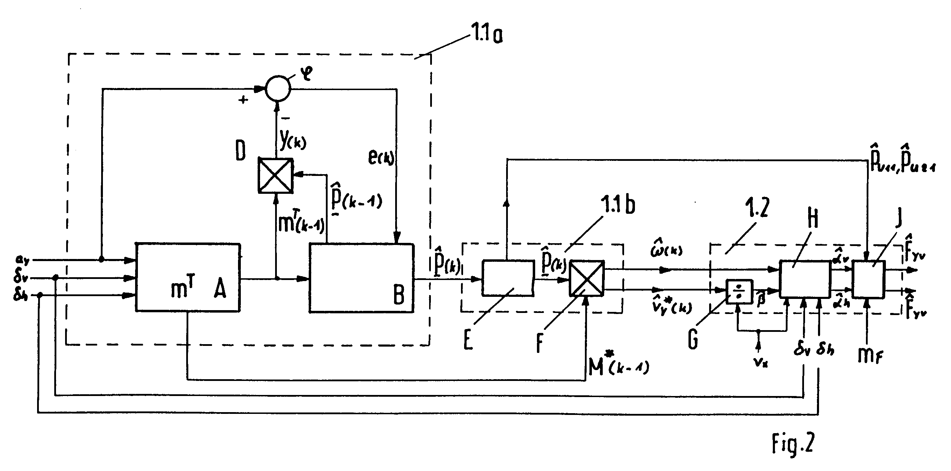

Anhand der Fig. 2 wird nunmehr eine ausführliche Beschreibung des erfindungsgemäßen Verfahrens gegeben. Es wird von der Basisgleichung

$$a_y(k) = [a_y(k-2)\ a_y(k-3)\ /\ \delta_v(k-1)\ \delta_v(k-2)\ \delta_v(k-3)\ /\ \delta_h(k-1)\ \delta_h(k-2)\ \delta_h(k-3)] \cdot \begin{bmatrix} p_{y1} \\ p_{y2} \\ p_{u11} \\ pu_{12} \\ p_{u13} \\ p_{u21} \\ pu_{22} \\ p_{u22} \end{bmatrix}$$

ausgegangen.

Aus den Meßwerten $a_y$, $\delta_v$ und $\delta_h$ wird im Block A der Datenvektor $\underline{m}(k-1)$ gebildet:

$$\underline{m}(k-1) = [a_y(k-2)\ a_y(k-3)\ /\ \delta_v(k-1)\ \delta_v(k-2)\ \delta_v(k-3)\ /\ \delta_h(k-1)\ \delta_h(k-2)\ \delta_h(k-3)]^T$$

In einem Parameterschätzalgorithmusblock B wird mit Hilfe eines Schätzalgorithmus ein Parametervektor $\underline{p}(k)$ rekursiv berechnet:

$$\underline{\hat{p}}(k) = \underline{\hat{p}}(k-1) + \underline{r}(k) \cdot e(k)$$

Dieser läßt sich wie folgt darstellen:

$$\underline{p} = [p_{y1}\ p_{y2}\ /\ p_{u11}\ p_{u12}\ p_{u13}\ /\ p_{u21}\ p_{u22}\ p_{u23}]^T$$

und steht im Block E zur Verfügung.

e(k) erhält man im Differenzbildner C:

$$e(k) = y(k) - \hat{y}(k) = y(k) - \underline{m}^T(k-1) \cdot \underline{p}(k-1)$$

Hierzu wird vorher $\hat{\underline{p}}(k-1)$ im Block D mit dem Datenvektor $\underline{m}^T(k-1)$ multipliziert.

$\underline{r}(k)$ wird bei stochastischer Approximation z.B. zu

$$\underline{r}(k) = \frac{1}{1 + \underline{m}^T(k-1) \cdot \underline{m}(k-1)} \cdot \underline{m}(k-1) \text{ gewählt.}$$

Der Zustandsvektor mit den zu bestimmenden Größen

$$\underline{x} = [\omega,\ V_y]^T$$

wird dann im Multiplizierer wie folgt gewonnen:

$$\underline{\hat{x}}(k) = M^*(k-1) \cdot \underline{\hat{p}}^*(k),$$

wobei $M^*(k-1)$ und $\hat{\underline{p}}^*(k)$ Matrizen sind, die aus dem Datenvektor $\underline{m}^T(k-1)$ bzw. dem Parametervektor $\hat{\underline{p}}(k)$ abgelesen werden können.

3

$$M^*(k-1) = \begin{bmatrix} a_y(k-1) & a_y(k-2) & | & \delta_v(k-1) & \delta_v(k-2) & | & \delta_h(k-1) & \delta_h(k-2) \\ 0 & a_y(k-1) & | & 0 & \delta_v(k-2) & | & 0 & \delta_h(k-1) \end{bmatrix}$$

$$\underline{\hat{p}}^*(k) = [\hat{p}_{y1}(k)\ \hat{p}_{y2}(k)\ |\ \hat{p}_{u12}(k)\ \hat{p}_{u13}(k)\ |\ \hat{p}_{u22}(k)\ \hat{p}_{u23}(k)]$$

Hieraus sind die Größen $\omega$ und $v_y$ entnehmbar
Aus diesen Werten können weitere Bewegungsgrößen abgeleitet werden:

$$\hat{\beta}(k) = \frac{\hat{v}_y(k)}{v_x}$$

,wobei $v_x$ die Fahrzeuggeschwindigkeit ist (Block G)

$$\hat{\alpha}_v(k) = \frac{\hat{v}_y(k) + l_v\omega(k)}{v_x} - \delta_v$$

,wobei $1_v$ der Abstand Schwerpunkte$\to$ Vorderachse ist (Block H).

$$\hat{\alpha}_h(k) = \frac{\hat{v}_y(k) + l_h\hat{\omega}(k)}{v_x} - \delta_v$$

,wobei $1_h$ der Abstand Schwerpunkte$\to$ Vorderachse ist (Block H)

$$\hat{F}_{yv} = \frac{m_F \cdot \hat{P}_{u11}}{2} - \hat{\alpha}_v(k) \quad\left.\vphantom{\begin{array}{c}1\\1\\1\\1\end{array}}\right\}$$

$$\hat{F}_{yh} = \frac{m_F \cdot \hat{p}_{u21}}{2} - \hat{\alpha}_h(k)$$

,wobei $m_F$ die Fahrzeugmasse ist (Block I)

**Patentansprüche**

1. Verfahren zur Gewinnung der Giergeschwindigkeit $\omega$ und/oder der Quergeschwindigkeit $v_y$ oder einer hiervon abhängigen Größe eines Fahrzeugs, <u>dadurch gekennzeichnet</u>, daß die Querbeschleunigung $a_y$ des Fahrzeugs, sein Vorderachslenkwinkel $\delta_v$ und sein Hinterachslenkwinkel $\delta_h$ (wenn vorhanden) ermittelt werden, und daß daraus unter Anwendung der folgenden Verfahrensschritte Werte für die Giergeschwindigkeit $\omega$ und/oder die Querge-schwindigkeit $v_y$ gewonnen werden:

- daß aus den drei Meßwerten ein Datenvektor
  $\underline{m}^T(k-1) = [a_y(k-2)\ a_y(k-3)\ /\ \delta_v(k-1)\ \delta_v(k-2)\ \delta_v(k-3)\ /\ \delta_h(k-1)\ \delta_h(k-2)\ \delta_h(k-3)]^T$ gebildet wird, wobei k, (k-1) usw.
  Meßzeitpunkte darstellen;
- daß der Schätzwert für die Querbeschleunigung $\hat{a}_y(k)$ durch Multiplikation des Datenvektors
  $\underline{m}^T(k-1)$ mit dem Schätzwert eines Parametervektors
  $\underline{\hat{p}}(k-1)$ ermittelt wird;

- daß der Schätzwert des Parametervektors
  $\hat{\underline{p}}(k)$ mit Hilfe eines Schätzalgorithmus aus dem vorher ermittelten Schätzwert
  $\hat{\underline{p}}(k-1)$ und einem Fehler $e(k) = a_y(k) - \hat{a}_y(k)$ rekursiv berechnet wird;
- und daß ein Zustandsvektor

$$\hat{\underline{x}}(k) = [\omega(k) \ v_y(k)]$$

durch Multiplikation der Matrix $\underline{M}^*(k-1)$

des Datenvektors $\underline{m}^T(k-1)$ mit der Matrix $\hat{\underline{p}}^*(k)$ des Parametervektors ermittelt wird

- woraus $\omega(k)$ und/oder $v_y(k)$ entnehmbar sind.

2. Verfahren nach Anspruch 1, dadurch gekennzeichnet, daß der Parametervektor $\hat{\underline{p}}(k)$ mittels der Beziehung

$$\hat{\underline{p}}(k) = \hat{\underline{p}}(k-1) + \underline{r}(k) \cdot e(k)$$

gewonnen wird, wobei $\underline{r}(k)$ bei "stochstischer Approximation" zu

$$\underline{r}(k) = \frac{1}{1 + \underline{m}^T(k-1) \cdot \underline{m}(k-1)} \cdot \underline{m}(k-1)$$

gewählt wird.

3. Verfahren nach Anspruch 1 oder 2, dadurch gekennzeichnet, daß aus der ermittelten Quergeschwindigkeit $\hat{v}_y$ und der gemessenen Längsgeschwindigkeit $v_x$ der Schwimmwinkel $\beta = \hat{v}_y/v_x$ ermittelt wird.

4. Verfahren nach einem der Ansprüche 1 - 3, dadurch gekennzeichnet, daß die Schräglaufwinkel $\alpha_v$(vorn) bzw. $\alpha_h$(hinten) der Achsen nach Maßgabe der Beziehung

$$\alpha_v(k) \frac{-\hat{v}_y(k) + l_v \hat{\omega}(k)}{v_x} - \delta_v \quad \text{bzw.} \quad \alpha_h(k) = \frac{\hat{v}_y(k) - l_h \hat{\omega}(k)}{v_x} - \delta_h$$

berechnet werden, wobei $1_v$ und $l_h$ die Abstände dieser Achsen vom Schwerpunkt sind.

5. Verfahren nach Anspruch 1, dadurch gekennzeichnet, daß die Seitenführungskräfte der Räder $F_{yv}$ bzw. $F_{yh}$ einer Achse nach Maßgabe der Beziehung

$$\hat{F}_{yv}(k) = - \frac{m_F \hat{p}_{u11}}{2} \cdot \hat{\alpha}_v(k) \quad \text{bzw.} \quad \hat{F}_{yh}(k) = - \frac{m_F \hat{p}_{u21}}{2} \cdot \hat{\alpha}_h(k)$$

ermittelt werden, wobei $m_F$ die Fahrzeugmasse, $\hat{p}_{u11}$ und $\hat{p}_{u21}$ die zugehörigen Glieder der Matrix des Parametervektors und $\alpha_v(k)$, $\alpha_h(k)$ die zur Achse gehörenden Schräglaufwinkeln sind.

## Claims

1. Method for obtaining the yaw velocity $\omega$ and/or the lateral velocity $v_y$ or a variable depending hereon, of a vehicle, characterised in that the lateral acceleration $a_y$ of the vehicle, its front axle steering angle $\delta_v$ and its rear axle steering angle $\delta_h$ (when present) are determined, and that values for the yaw velocity $\omega$ and/or the lateral velocity $v_y$ are obtained using the following method steps:

- a data vector

$$\underline{m}^{T}(k\text{-}1) = [a_{y}(k\text{-}2)\ a_{y}(k\text{-}3)/\delta_{v}(k\text{-}1)\ \delta_{v}(k\text{-}2)\ \delta_{v}(k\text{-}3)/\ \delta_{h}(k\text{-}1)\ \delta_{h}(k\text{-}2)\ \delta_{h}(k\text{-}3)]^{T}$$

is formed from the three measured values, k, (k-1), etc. representing measurement times;

- the estimated value for the lateral acceleration $\hat{a}_{y}(k)$ is determined by multiplying the data vector $\underline{m}^{T}(k\text{-}1)$ by the estimated value of a parameter vector $\underline{\hat{p}}(k\text{-}1)$;
- the estimated value of the parameter vector $\underline{\hat{p}}(k)$ is calculated recursively with the aid of an estimating algorithm from the previously determined estimated value $\underline{\hat{p}}(k\text{-}1)$ and an error $e(k) = a_{y}(k) - \hat{a}_{y}(k)$; and
- a state vector

$$\underline{\hat{x}}(k)\ =\ [\omega(k)\ \ \dot{v}_{y}(k)]$$

is determined by multiplying the matrix $\underline{M}^{*}(k\text{-}1)$ of the data vector $\underline{m}^{T}(k\text{-}1)$ by the matrix $\underline{\hat{p}}^{*}(k)$ of the parameter vector

- from which $\omega(k)$ and/or $v_{y}(k)$ can be extracted.

2. Method according to Claim 1, characterised in that the parameter vector $\underline{\hat{p}}(k)$ is obtained by means of the relationship

$$\underline{\hat{p}}(k)\ =\ \underline{\hat{p}}(k\text{-}1)\ +\ \underline{r}(k)\ \cdot\ e(k)$$

$\underline{r}(k)$ being selected in a "stochastic approximation" as

$$\underline{r}(k) = \frac{1}{1 + \underline{m}^{T}(k\text{-}1)\cdot\underline{m}(k\text{-}1)}\cdot\underline{m}(k\text{-}1)$$

3. Method according to Claim 1 or 2, characterised in that the attitude angle $\beta = \hat{v}_{y}/v_{x}$ is determined from the lateral velocity $\hat{v}_{y}$ which has been determined and the measured longitudinal velocity $v_{x}$.

4. Method according to one of Claims 1 - 3, characterised in that the slip angles $\alpha_{v}$ (front) or $\alpha_{h}$ (rear) of the axles are calculated in accordance with the relationship

$$\alpha_{v}(k)\frac{-\hat{v}_{y}(k) + 1_{v}\hat{w}(k)}{v_{x}} - \delta_{v}\ \text{ or }\ \alpha_{h}(k) = \frac{\hat{v}_{y}(k) - 1_{h}\hat{w}(k)}{v_{x}} - \delta_{h}$$

$l_{v}$ and $l_{h}$ being the separations of these axles from the centre of gravity.

5. Method according to Claim 1, characterised in that the cornering forces of the wheels $F_{yv}$ or $F_{yh}$ of an axle are determined in accordance with the relationship

$$\hat{F}_{yv}(k) = - \frac{m_{F}\ \hat{p}_{u11}}{2}\cdot\hat{\alpha}_{v}(k)\ \text{ or }\ \hat{F}_{yh}(k) = - \frac{m_{F}\ \hat{p}_{u21}}{2}\cdot\hat{\alpha}_{h}(k)$$

$m_{F}$ being the vehicle mass, $\hat{p}_{u11}$ and $\hat{p}_{u21}$ the associated elements of the matrix of the parameter vector, and $\alpha_{v}(k)$, $\alpha_{h}(k)$ the slip angles related to the axle.

**Revendications**

1. Procédé pour obtenir la vitesse de lacet $\omega$ et/ou la vitesse transversale $v_{y}$ ou un paramètre du véhicule qui en dépend, caractérisé en ce qu'on détermine l'accélération transversale $a_{y}$ du véhicule, son angle de braquage de l'essieu avant $\delta_{v}$ et son angle de braquage de l'essieu arrière $\delta_{h}$ (le cas échéant) et en appliquant les étapes de procédé suivantes on détermine les valeurs pour la vitesse de lacet $\omega$ et/ou la vitesse transversale $v_{y}$ :

- à partir des trois valeurs de mesure on détermine un vecteur de données

$$\underline{m}^T(k\text{-}1) = [a_y(k\text{-}2)\ a_y(k\text{-}3)\ /\ \delta_v(k\text{-}1)\ \delta_v(k\text{-}2)\ \delta_v(k\text{-}3)/\ \delta_h(k\text{-}1)\ \delta_h(k\text{-}2)\ \delta_h(k\text{-}3)]^T,$$

dans lequel k, (k-1) représentent des instants de mesure,
- on détermine la valeur évaluée de l'accélération transversale $\hat{a}_y(k)$ par multiplication du vecteur de données $\underline{m}^T(k\text{-}1)$ avec la valeur évaluée d'un vecteur de paramètre $\hat{\underline{p}}(k\text{-}1)$,
- on calcule par récurrence la valeur évaluée du vecteur de paramètre $\hat{\underline{p}}(k)$ à l'aide d'un algorithme d'évaluation à partir de la valeur évaluée précédemment $\hat{\underline{p}}(k\text{-}1)$ et d'une erreur $e(\overline{k}) = a_y(k) - \hat{a}_y(k)$
- et on détermine le vecteur d'état

$$\hat{\underline{x}}(k) = [\ \omega(k)\ v_y(k)\ ]$$

par multiplication de la matrice $\underline{M}^*(k\text{-}1)$ du vecteur de données $\underline{m}^T(k\text{-}1)$ par la matrice $\hat{\underline{p}}^*(k)$ du vecteur de paramètre,
- puis on extrait $\omega(k)$ et/ou $v_y(k)$.

2. Procédé selon la revendication 1, caractérisé en ce qu'on obtient le vecteur de paramètre $\hat{\underline{p}}(k)$ par la relation suivante

$$\hat{\underline{p}}(k) = \hat{\underline{p}}(k\text{--}1) + \underline{r}(k) \cdot e(k)$$

$\underline{r}(k)$ étant choisi comme approximation stochastique pour

$$\underline{r}(k) = \frac{1}{1 + \underline{m}^T(k\text{-}1) \cdot \underline{m}(k\text{-}1)} \cdot \underline{m}(k\text{-}1)$$

3. Procédé selon la revendication 1 ou 2, caractérisé en ce qu'à partir de la vitesse transversale $\hat{v}_y$ déterminée et la vitesse longitudinale $v_x$ mesurée on détermine l'angle de flottement $\beta = \hat{v}_y / v_x$.

4. Procédé selon l'une des revendications 1-3, caractérisé en ce qu'on calcule l'angle de marche en biais $\alpha_v$ (avant) ou $\alpha_h$ (arrière) des essieux selon la relation

$$\alpha_v(k)\frac{-\hat{v}_y(k) + l_v\hat{\omega}(k)}{v_x} - \delta_v \text{ ou } \alpha_h(k) = \frac{\hat{v}_y(k) - l_h\hat{\omega}(k)}{v_x} - \delta_h$$

dans laquelle $l_v$ et $l_h$ représentent la distance des axes par rapport au centre de gravité.

5. Procédé selon la revendication 1, caractérisé en ce qu'on détermine les forces de guidage latéral des roues $F_{yv}$ ou $F_{yh}$ d'un essieu selon la relation suivante

$$\hat{F}_{yv}(k) = -\frac{m_F\ \hat{p}_{u11}}{2} \cdot \hat{\alpha}_v(k) \text{ ou } \hat{F}_{yh}(k) = -\frac{m_F\ \hat{p}_{u21}}{2} \cdot \hat{\alpha}_h(k)$$

dans laquelle $m_F$ représente la masse du véhicule, $\hat{p}_{u11}$ et $\hat{p}_{u21}$ représentent les éléments de la matrice du vecteur de paramètre et $\alpha_v(k)$ et $\alpha_h(k)$ représentent les angles de marche en biais correspondant à l'axe.

Fig.1

Fig.2